# FASCICULE DE BREVET EUROPEEN

(11) **EP 1 472 475 B1**
(45) Date de publication et mention de la délivrance du brevet: **05.10.2005**
(21) Numéro de dépôt: 03717379.6
(22) Date de dépôt: 06.02.2003
(51) Int. Cl.: F16H 1/00

(54) **DIFFERENTIEL POUR VEHICULE AUTOMOBILE**
DIFFERENTIAL FÜR FAHRZEUGE
MOTOR VEHICLE DIFFERENTIAL

(30) Priorité: 08.02.2002 FR 0201572
(43) Date de publication de la demande: 03.11.2004
(73) Titulaire: Peugeot Citroen Automobiles SA, 92200 Neuilly sur Seine (FR)
(72) Inventeur: SANTELLI, Franck, F-95240 Cormeilles-en-Parisis (FR)
(74) Mandataire: Thinat, Michel
(86) Numéro de dépôt international: PCT/FR2003/000377
(87) Numéro de publication internationale: WO 2003/067122

(56) Documents cités:
- US-A- 5 713 247
- US-A- 6 074 321

## Description

La présente invention concerne un différentiel pour véhicule automobile.

Un tel différentiel comprend un boîtier de différentiel pouvant être entraîné par une couronne solidaire de ce boîtier, des satellites montés à rotation dans le boîtier par des axes traversant celui-ci en étant immobilisés en translation relativement au boîtier, et deux planétaires montés à rotation dans le boîtier en engrènement avec les satellites.

Diverses solutions ont été proposées jusqu'à maintenant pour bloquer en translation les axes des satellites dans le boîtier.

' L'une de ces solutions prévoit l'utilisation d'un jonc logé dans une gorge de réception réalisée dans chaque perçage du corps du boîtier à travers lequel est introduit l'axe correspondant de satellite. Cette solution nécessite non seulement l'usinage de gorges mais a également pour inconvénient que les gorges fragilisent grandement la tenue du corps du boîtier de différentiel.

Une autre solution consiste à prévoir une vis spécifique d'arrêt de chaque axe de satellite. Cette solution a pour inconvénient majeur d'être volumineuse.

Encore une autre solution prévoit l'utilisation d'une goupille d'arrêt de chaque axe de satellite implantée en partie dans le corps du boîtier de différentiel en faisant saillie dans le perçage de ce corps permettant le passage de l'axe de satellites. Cette solution nécessite l'usinage de perçages pour le passage et l'implantation des goupilles.

On connaît également une solution utilisant des plaquettes rapportées amoviblement fixées au corps du boîtier de différentiel et comportant chacune une languette obturant le perçage correspondant de passage de l'axe de satellite dans le boîtier de différentiel. Cependant, l'utilisation de plaquettes rapportées dépend du système d'assemblage de la couronne d'entraînement du boîtier de différentiel.

Le document US 6074321 A, qui montre notamment un différentiel générique comportant toutes les caractéristiques du préambule de la revendication 1, divulgue et décrit un différentiel dans lequel l'axe portant les satellites est immobilisé en translation relativement au boîtier de différentiel. Cette immobilisation est réalisée par I intermédiaire d'un support cylindrique qui recouvre entièrement les deux extrémités dudit axe. Les coûts de production de ce support sont élevés, et de plus ce support a un poids relativement important, ce qui est pénalisant pour a rotation du différentiel.

La présente invention a pour but d'éliminer les inconvénients ci-dessus des diverses solutions connues permettant l'arrêt en translation des axes de satellites dans le boîtier de différentiel caractérisé en ce que le capuchon (11) d'arrêt des axes (6) des satellites (5) coiffe en l'épousant la majeure partie du boîtier de différentiel (1) et est immobilisé en translation relativement à ce boîtier par son extrémité annulaire (11a) opposée à la couronne (2) venant en appui sur la bague intérieure (10a) du roulement de pont (10) monté sur un support tubulaire (1a) du boîtier (1).

A cet effet, l'invention propose un différentiel pour véhicule automobile, comprenant un boîtier de différentiel pouvant être entraîné par une couronne solidaire du boîtier, des satellites montés à rotation dans le boîtier par des axes traversant le boîtier en étant immobilisés en translation relativement au boîtier, et deux planétaires montés à rotation dans le boîtier en engrènement avec les satellites, et qui est caractérisé en ce que les axes des satellites sont immobilisés en translation par un capuchon coiffant au moins la partie du boîtier de différentiel traversée par les axes de façon à recouvrir au moins partiellement les perçages de passage des axes réalisés à travers la paroi périphérique du boîtier de différentiel .

Le capuchon d'arrêt des axes des satellites est maintenu en translation sur le boîtier de différentiel.

De préférence, le capuchon d'arrêt des axes des satellites coiffe en l'épousant la majeure partie du boîtier de différentiel et est immobilisé en translation relativement à ce boîtier par son extrémité annulaire opposée à la couronne venant en appui sur la bague intérieure du roulement de pont monté sur un support tubulaire du boîtier de différentiel.

Selon une variante de réalisation, le capuchon est réalisé en une matière plastique.

Selon une autre variante de réalisation, le capuchon est réalisé en tôle emboutie.

L'invention sera mieux comprise et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue en perspective éclatée d'un différentiel pour véhicule automobile conforme à l'invention ;
- la figure 2 est une vue en perspective du capuchon de l'invention permettant d'immobiliser en translation des axes de satellites du différentiel de la figure 1 ; et
- la figure 3 est une vue partielle en coupe du capuchon immobilisant un axe de satellite.

Le différentiel pour véhicule automobile tel que représenté aux figures comprend un boîtier de différentiel 1 de forme générale tronconique et une couronne 2 d'entraînement du boîtier 1 amoviblement fixée au boîtier 1 par des rivets 3 ou autres moyens analogues tels que par exemple des vis de fixation.

Le boîtier de différentiel 1 comporte plusieurs perçages 4 traversant sa paroi périphérique en étant angulairement espacés de façon équidistante les uns des autres suivant une même circonférence.

Le différentiel comprend des satellites 5 montés à rotation dans le boîtier 1 par des axes 6 engagés de l'extérieur dans les perçages 4 en ayant leurs extrémités logées respectivement dans ces perçages. L'extrémité opposée de chaque axe de satellite 6 située à l'intérieur du boîtier 1 pénètre dans un perçage conjugué 7 d'une pièce centrale cylindrique de support 8.

Le différentiel comprend de plus deux planétaires 9 logés dans le boîtier 1 en engrènement avec les satellites 5.

Comme représenté, le boîtier de différentiel 1 contient quatre satellites 5 montés respectivement sur quatre axes 6, dont trois seulement sont représentés, les axes 6 étant situés dans un même plan et orthogonalement les uns par rapport aux autres.

Le différentiel comprend enfin deux roulements de pont 6 montés à ses extrémités comme cela est connu en soi.

Selon l'invention, les axes de satellites 6 sont immobilisés en translation dans leurs perçages respectifs 4 par un moyen formant capuchon 11 coiffant au moins la partie périphérique du boîtier de différentiel 1 où se trouvent les perçages 4 de façon à recouvrir au moins partiellement ces perçages.

De préférence, le capuchon 11 coiffe en l'épousant la majeure partie du boîtier de différentiel 1 et est immobilisé en translation relativement au boîtier 1 par son extrémité annulaire 11a opposée à la couronne 2 en appui sur la bague intérieure 10a du roulement 10 montée sur un support tubulaire 1a du boîtier 1 et coaxial à l'axe longitudinal du différentiel passant par les différents composants de celui-ci comprenant le boîtier 1, les planétaires 9, la pièce cylindrique centrale 8 et la couronne 2. La partie d'extrémité annulaire 11b du capuchon 11 opposée à celle 11a peut être conformée de façon à s'étendre sur des méplats externes 12 usinés sur le corps du boîtier 1 parallèlement à l'axe longitudinal de différentiel et desquels débouchent respectivement les perçages 4. Cette partie annulaire a ainsi sa face interne en regard de chaque méplat d'orifice 4 qui est plane et située à proximité immédiate de celui-ci de façon à ne laisser subsister qu'un très faible jeu entre celle-ci et l'extrémité correspondante de l'axe de satellite 6.

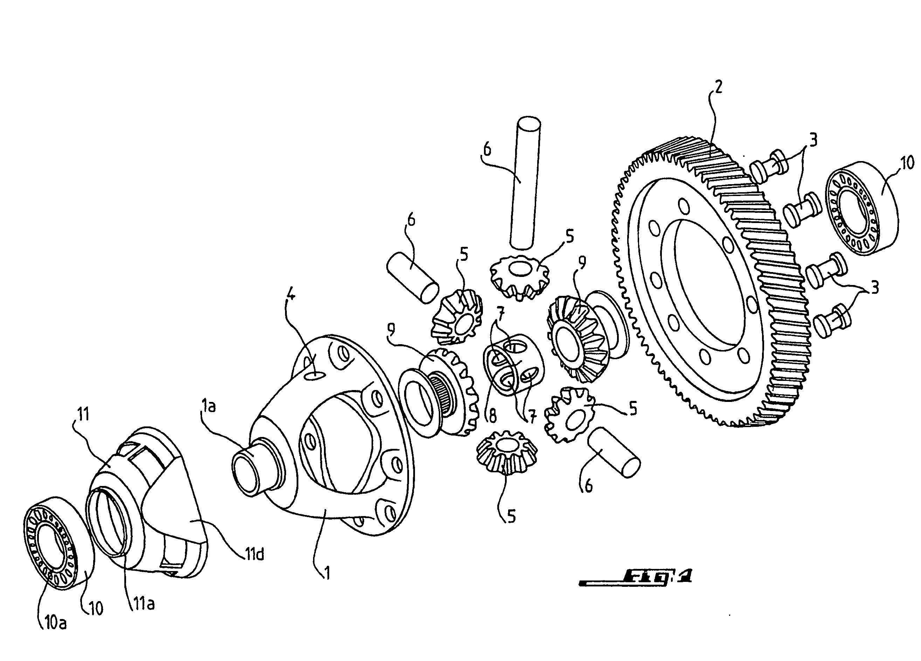

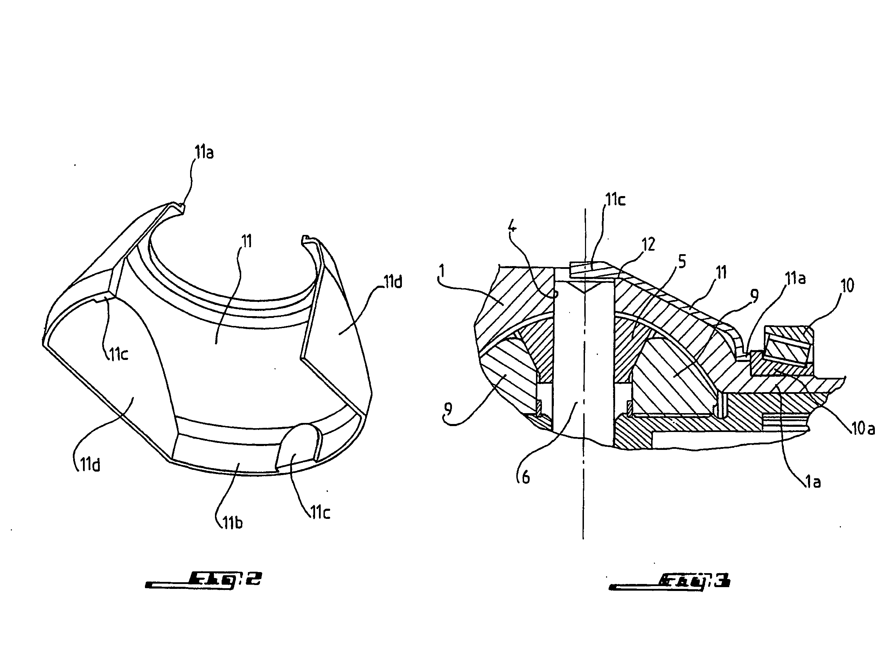

La figure 2 représente plus particulièrement une telle conformation constituée par une partie faisant saillie intérieurement 11c venant au-dessus d'un méplat 12 du perçage correspondant 4. Cette figure montre également que le capuchon 11 peut être ouvert, c'est-à-dire ne coiffant pas complètement le pourtour du boîtier de différentiel 1 et comporte deux parois latérales ou joues parallèles planes 11d qui coopèrent avec deux parties de parois latérales de ce boîtier pour immobiliser en rotation le capuchon 11 relativement au boîtier 1.

Le capuchon 11 peut être réalisé en une matière plastique ou, selon une variante de réalisation, en tôle emboutie.

L'ordre de montage des différents composants du différentiel est le suivant : les planétaires 9 et les satellites 5 sont montés dans le boîtier de différentiel 1 et les axes 6 des satellites 5 sont ensuite montés de l'extérieur au travers des perçages 4. Puis, le capuchon 11 d'arrêt des axes de satellites 6 est monté sur le boîtier de différentiel 1 avant de monter les roulements de pont 10.

Le capuchon d'arrêt en translation des axes de satellites est d'une structure relativement simple, peu coûteux, ne nécessite pas d'usinage particulier et est indépendant de l'assemblage de la couronne au boîtier de différentiel, le montage ou le démontage de chaque axe de satellites et des composants internes du différentiel pouvant intervenir avec la couronne assemblée à celui-ci.

## Revendications

1. Différentiel pour véhicule automobile, comprenant un boîtier de différentiel (1) pouvant être entraîné par une couronne (2) solidaire du boîtier (1), des satellites (5) montés à rotation dans le boîtier (1) par des axes (6) traversant le boîtier en étant immobilisés en translation relativement au boîtier (1), et deux planétaires (9) montés à rotation dans le boîtier (1) en engrènement avec les satellites (5), les axes (6) des satellites (5) étant immobilisés en translation par un capuchon (11) coiffant au moins la partie du boîtier de différentiel (1) traversée par les axes (6) de façon à recouvrir au moins partiellement les perçages (4) de passage des axes (6) réalisés à travers la paroi périphérique du boîtier de différentiel (1), **caractérisé en ce que** le capuchon (11) d'arrêt des axes (6) des satellites (5) coiffe en l'épousant la majeure partie du boîtier de différentiel (1) et est immobilisé en translation relativement à ce boîtier par son extrémité annulaire (11a) opposée à la couronne (2) venant en appui sur la bague intérieure (10a) du roulement de pont (10) monté sur un support tubulaire (1a) du boîtier (1).

2. Différentiel selon la revendication 1, **caractérisé en ce que** le capuchon (11) d'arrêt des axes (6) des satellites (5) est maintenu en translation sur le boîtier de différentiel (1).

3. Différentiel selon la revendication 1 ou 2, **caractérisé en ce que** le capuchon (11) est réalisé en une matière plastique.

4. Différentiel selon la revendication 1 ou 2, **caractérisé en ce que** le capuchon (11) est réalisé en tôle emboutie.

## Patentansprüche

1. Differential für Kraftfahrzeuge, mit einem Differentialgehäuse (1), das über einen mit dem Gehäuse (1) fest verbundenen Zahnkranz (2) angetrieben werden kann, mit Ausgleichsrädern (5), die im Gehäuse (1) über Achsen (6) drehbar gelagert sind, welche das Gehäuse durchsetzen, indem sie relativ zum Gehäuse (1) verschiebefest festgehalten werden, sowie mit zwei Planetenrädern (9), die im Gehäuse (1) drehbar gelagert sind und mit den Ausgleichsrädern (5) kämmen, wobei die Achsen (6) der Ausgleichsräder (5) über eine Kappe (11) verschiebefest festgehalten werden, die zumindest den von den Achsen (6) durchsetzten Abschnitt des Differentialgehäuses (1) so übergreift, dass zumindest die Bohrungen (4) für den Durchtritt der Achsen (6) überdeckt werden, die durch die Umfangswand des Differentialgehäuses (1) ausgebildet sind, **dadurch gekennzeichnet, dass** die Kappe (11) zum Sichern der Achsen (6) der Ausgleichsräder (5) den Großteil des Differentialgehäuses (1) übergreift und sich dabei an dieses anschmiegt und mit ihrem ringförmigen Ende (11a), das dem Zahnkranz (2) entgegengesetzt ist und sich an den Innenring (10a) des an einem rohrförmigen Träger (1a) des Gehäuses (1) montierten Achsbrückenlagers (10) abstützt, relativ zu diesem Gehäuse verschiebefest festgehalten wird.

2. Differential nach Anspruch 1, **dadurch gekennzeichnet, dass** die Kappe (11) zum Sichern der Achsen (6) der Ausgleichsräder (5) verschiebbar am Differentialgehäuse (1) gehalten ist.

3. Differential nach Anspruch 1 oder 2, **dadurch gekennzeichnet, dass** die Kappe (11) aus Kunststoffmaterial hergestellt ist.

4. Differential nach Anspruch 1 oder 2, **dadurch gekennzeichnet, dass** die Kappe (11) aus tiefgezogenem Blech hergestellt ist.

## Claims

1. Motor vehicle differential, comprising a differential box (1) that can be driven by a belt (2) integral with the box (1), bevel pinions (5) mounted in rotation in the box (1) by means of shafts (6) crossing the box, these shafts being immobilised in translation relative to the box (1), and two planet wheels (9) mounted in rotation in the box (1), and engaging with the satellite gears (5), the shafts (6) of the bevel pinions (5) being immobilised in translation by a cowl (11) covering at least that part of the differential box (1) which is crossed by the shafts (6) so that the holes (4) through which the shafts (6) pass, drilled in the peripheral wall of the differential box (1), are at least partially covered, **characterised in that** the cowl (11) stopping the shafts (6) of the bevel pinions (6) covers most of the differential box (1) by following it, and is immobilised in translation relative to this box by its annular end (11a) opposing the crown (2), which is supported on the inner ring (10a) of the bridge bearing (10) mounted on a tubular support (1a) of the box (1).

2. Differential according to Claim 1, **characterised in that** the cowl (11) for stopping the shafts (6) of the bevel pinions (5) is maintained in translatory motion on the differential box (1)

3. Differential according to Claim 1 or 2, **characterised in that** the cowl (11) is constructed from a plastic material.

4. Differential according to Claim 1 or 2, **characterised in that** the cowl (11) is constructed from stamped sheet steel.
